# EUROPÄISCHE PATENTANMELDUNG

(11) **EP 0 945 061 A2**
(43) Veröffentlichungstag der Anmeldung: **29.09.1999**
(21) Anmeldenummer: 99112902.4
(22) Anmeldetag: 07.06.1996
(51) Int. Cl.: A01K 27/00

(54) **Halsband für Tiere**

(30) Priorität: 10.06.1995 DE 29509539 U; 23.02.1996 DE 29603290 U; 30.03.1996 DE 29605968 U
(62) Teilanmeldung aus: 96917502.5
(71) Anmelder: Beaphar Import & Export GmbH, 46446 Emmerich (DE)
(72) Erfinder: AA, Johannes, Hendricus, Lifgerus, 46446 Emmerich (DE)
(74) Vertreter: Richter, Werdermann & Gerbaulet

(57) **Zusammenfassung**

Das Halsband zum Befestigen am Hals eines Tieres, wie Hund, Katze od. dgl. gegen Ungeziefer, insbesondere Flöhe, enthält ein in das Bandmaterial aus Kunststoff eingearbeitetes Insektizid (20) und weist mindestens eine Aufnahmetasche (15) an der Halsbandaußenwandfläche (10c) für einen Riech- oder Duftstoff (120) auf.

## Beschreibung

Die Erfindung betrifft ein Halsband zum Befestigen am Hals eines Tieres, wie Hund, Katze od. dgl. gegen Ungeziefer, insbesondere Flöhe, gemäß dem Oberbegriff des Anspruches 1.

Zur äußerlichen Anwendung bei Hunden und bei Katzen bei Befall von Flöhen ist es bekannt, am Hals des Tieres ein Band zu befestigen, welches aus Kunststoff oder anderen geeigneten Werkstoffen besteht und das mit einem Insektizid versehen ist. Derartige Ungezieferbänder für Tiere werden bei diesen bei Befall mit Flöhen, u.a. auch bei Zecken, eingesetzt. Nachteilig ist jedoch, daß beim Tragen eines derartigen Ungezieferbandes in geschlossenen Räumen die in das Bandmaterial eingearbeiteten Insektizide unangenehme Gerüche verbreiten, so daß Hund- und/oder Katzenhalter die Anwendung derartiger Ungezieferbänder im Freien bevorzugen.

Ein Halsband zum Befestigen am Hals eines Tieres gegen Ungeziefer, wobei in das aus einem Kunststoffmaterial bestehende Bandmaterial ein Insektizid und ein Riechstoff eingearbeitet ist, ist durch die FR-A-24 47 679 bekannt. Das Insektizid soll sich auf den Haaren des Tieres absetzen und bei Bewegungen des Tieres über den ganzen Tierkörper wandern und durch entsprechenden Kontakt mit den Parasiten am Körper des Tieres auf diese einwirken.

Durch die FR-A-27 03 214 ist ferner ein Halsband bekannt, bei dem das Insektizid in einem gesonderten Füllteil untergebracht, das als externes Element an dem Halsband befestigt wird. Danach ist das streifenförmige Füllteil in einem Schlauch oder Hülle angeordnet, die an der Innenwandfläche des Halsbandes befestigt wird. Die Befestigung erfolgt mittels einer Klettverbindung, durch wechselseitiges Einführen durch eine Anzahl von Schlaufen im Halsband selbst oder mittels einer druckknopfartigen Verbindung. Bei allen Ausführungsformen ist das Insektizid enthaltende Füllteil austauschbar an dem Halsband befestigt, das zum Befestigen des Füllteils in einigen Fällen eine besondere Ausgestaltung aufweisen muß. Hinzu kommt, daß das Füllteil gegenüber dem Halsband kleiner bemessen ist, so daß nicht die volle Fläche des Halsbandes für eine Wirkstoffabgabe zur Verfügung steht. Soweit das Füllteil an der Innenwandfläche des Halsbandes befestigt ist, kann das Insektizid nur in Richtung des Tieres wirken, das das Halsband trägt. Die insektizidische Wirkung ist demnach beschränkt. Außerdem kann dem Insektizid im Füllteil ein Riech- oder Duftstoff beigefügt sein, um die unangenehmen, durch das Insektizid hervorgerufenen Gerüche zu maskieren bzw. zu überlagern. Da aber auch die Riech- oder Duftstoffe an der Innenwandfläche des Halsbandes vorgesehen sind, kommen diese Riech- oder Duftstoffe nicht voll zur Wirkung, da ihr Duft nicht nach außen strömen kann. Bei diesem Halsband sind weder das Insektizid noch der Riech- oder Duftstoff in das Material des Halsbandes eingelassen.

Es ist weiterhin bekannt, an herkömmlichen Halsbändern für Hunde Anhänger an den vorhandenen Einhängevorrichtungen für Leinen anzubringen, auf denen die Steuernummer aufgebracht ist.

Nachteilig ist jedoch, daß diese Anhänger relativ groß und dem Hund oft lästig sind und dieser sich entweder das Halsband selbst abstreift oder der Eigentümer aus Bequemlichkeit auf den Anhänger verzichtet, da der Hund ständig versucht, den lästigen Fremdkörper durch Kratzen oder Reiben los zu werden. Weiterhin ist es für einen Finder eines verloren gegangenen Hundes im allgemeinen nicht ohne weiteres möglich, aus der Steuernummer auf die Adresse des Eigentümers zu schließen, so daß eine Zurückführung des Hundes zum Eigentümer schwierig und umständlich ist.

Weiterhin ist es nachteilig, daß diese Anhänger oftmals verloren gehen, insbesondere dann, wenn das Tier durch Gestrüpp oder Unterholz läuft, wo sich der Anhänger festhaken und abreißen kann.

Das Halsband nach der FR-A-27 03 214 kann ferner mit einer Identifikation des Tieres/Eigentümers versehen sein, jedoch ist diese Identifikation nicht an dem Halsband direkt vorgesehen, sondern an dem das Insektizid und den Riech- oder Duftstoff enthaltenden Füllteil, wobei diese Identifikation in das Füllteil eingraviert oder aufgedruckt sein kann und Hinweise auf die Behandlung, Zeit, Marke und Name und Adresse des Tieres enthält. Dadurch, daß die Identifikation nicht integrierter Bestandteil des Halsbandes ist, steht die Identifikation dann nicht zur Verfügung, wenn das Füllteil zum Austausch noch nicht ersetzt worden ist oder der Tierhalter das Halsband ohne Füllteil mit insektizidischer Wirkung benutzen will. Eine Rückführung eines verirrten oder verlorenen Tieres zum Eigentümer ist dann nicht möglich.

Es ist Aufgabe der vorliegenden Erfindung, ein Halsband für Tiere, insbesondere für Hunde und Katzen gegen Ungeziefer, insbesondere Flöhe zu schaffen, bei dem der vom eingesetzten Insektizid ausgehende unangenehme Geruch besser maskiert bzw. überlagert wird, so daß das Ungezieferhalsband vom Tier auch in geschlossenen Räumen getragen werden kann. Außerdem soll das am Tier angelegte Ungezieferband für den Fall des Abhandenkommens des Tieres eine Rückführung an seinen Eigentümer ermöglichen.

Gelöst wird diese Aufgabe bei einem Halsband gemäß der eingangs beschriebenen Art mit dem in dem Kennzeichen des Anspruches 1 angegebenen Merkmalen.

Die Erfindung besteht nach Anspruch 1 darin, daß das mit Polyvinylchlorid, Dioctylphthalat, Di-isobutylphthalat, epoxidiertes Sojabohnenöl, Calciumstearat, Zinkstearat, Stearinsäure, Calciumcarbonat, ätherische Öle, Farbstoff dem Insektizid versehene Bandmaterial des Halsbandes an seiner Außenwandfläche mit mindestens einer Aufnahmetasche für einen Riech- oder Duftstoff pflanzlicher oder synthetischer Art versehen ist, so daß der Geruch, den das Insektizid verbreitet, maskiert bzw. überlagert wird, und lediglich der angenehme Geruch der eingesetzten Riech- und Duftstoffe zur Anwendung kommt.

Neben Riechstoffen sind auch pflanzliche oder synthetische Duftstoffe in Form eines ätherischen Öles, eines Duftstoff-Fett- oder -Wachs-Gemisches, eines Resinoids oder eines Fixateurs einsetzbar. Diese Riech- und Duftstoffe sind in der an dem Bandmaterial ausgebildeten Aufnahmetasche untergebracht.

Zur Zurückführung eines verirrten oder verlorenen Tieres zum Eigentümer sind eine individuelle Identifikationsnummer (ID-Nr.) und eine Telefonnummer unauslöschbar bzw. unlösbar an dem Halsband angebracht, wobei nach einer vorteilhaften Ausgestaltung die Telefon- und/oder Identifikationsnummer im Halsband eingeprägt sind. Dies hat den Vorteil, daß das Halsband keine zusätzlichen Teile benötigt und die Nummer vom Halsband nicht entfernt werden oder verlorengehen können.

Weitere vorteilhafte Ausgestaltungen der Erfindung gehen aus den Unteransprüchen hervor. Hier ist besonders vorteilhaft die Anordnung und Unterbringung der Duft- und Riechstoffe in den an der Außenwandfläche des Halsbandes ausgebildeten Taschen, die bevorzugterweise von einer dünnwandigen Folie gebildet werden, wobei es vorteilhaft ist, wenn wasserdampfdurchlässige Kunststoffolie eingesetzt wird, durch die die Duft- und Riechstoffe mit voller Wirkung nach außen geleitet werden können.

In weiteren vorteilhaften Ausgestaltungen der Erfindung sind/ist die Telefon- und/oder die Identifikationsnummer auf einen Träger aufgebracht, der mit dem Halsband verschweißt, auf dem Halsband aufgenietet oder in einer auf dem Halsband angeordneten Tasche oder Hülle angeordnet ist.

Das Halsband selbst enthält zu 24g als Insektizid 3,6g Dimpylat und bevorzugterweise folgende weitere Bestandteile: Polyvinylchlorid, Dioctylphthalat, Di-isobutylphthalat, epoxidiertes Sojabohnenöl, Calciumstearat, Zinkstearat, Stearinsäure, Calciumcarbonat, ätherische Öle, Farbstoff.

Ausführungsbeispiele der Erfindung sind in den Zeichnungen dargestellt, und zwar zeigt
- Fig. 1: ein Halsband für Hunde und Katzen mit in Form von Partikelchen angedeuteten, in das Bandmaterial eingearbeiteten Insektiziden,
- Fig. 2: ein Halsband für Hunde und Katzen mit in Form von Partikelchen angedeuteten, in das Bandmaterial eingearbeiteten Insektiziden und eingeprägter Telefon- und Identifikationsnummer, und
- Fig. 3: eine weitere Ausführungsform eines Halsbandes mit auf der Außenfläche des Bandes aufgeschweißter Kunststoffolie, die mit Telefon- und Identifikationsnummer bedruckt ist.

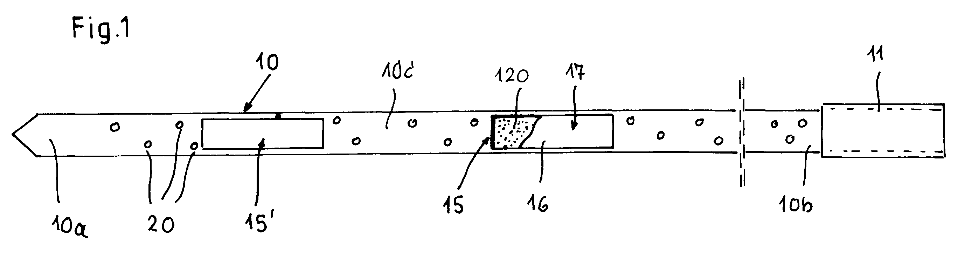

Das in Fig. 1 dargestellte Halsband 10 besteht aus einem bandförmigen Zuschnitt mit den Enden 10a, 10b aus einem Kunststoff, insbesondere einem plastischen Kunststoff, in den ein Insektizid eingearbeitet ist. Besonders vorteilhaft ist die Verwendung von Dimpylat als Wirkstoff gegen Ungeziefer, mit dem Hunde befallen sind. An den Enden ist das Halsband 10 mit geeigneten Verschlußmitteln versehen. Diese Verschlußmittel, die in Fig. 1 bei 11 angedeutet sind, können als Klemmverschlüsse, als Rastverschlüsse oder als Klettverschlüsse ausgebildet sein, wobei auch andersartig ausgebildete Verschlußmittel eingesetzt werden können.

Das in das Kunststoffmaterial des Halsbandes 10 eingearbeitete Insektizid ist in Form kleiner Partikelchen 20 angedeutet, um darzustellen, daß in das Kunststoffmaterial des Halsbandes Insektizide eingearbeitet sind.

Zur Maskierung bzw. Überlagerung des vom Insektizid ausgehenden Geruches ist an der Außenwandfläche 10c des Halsbandes 1ß mindestens eine Aufnahmetasche 15 zur Aufnahme eines Riech- oder Duftstoffes 120 ausgebildet, der zur besseren Darstellung in Form kleiner Partikelchen 120 angedeutet ist. Ist an der Außenwandfläche 10c des Halsbandes 10 nur eine Aufnahmetasche 15 vorgesehen, dann kann sich deren Größe nach der Länge des Halsbandes richten, d.h. die Aufnahmetasche 15 kann sich über die gesamte Länge des Halsbandes erstrecken, wobei auch die Möglichkeit besteht, nur in einem bestimmten Bericht des Halsbandes die Aufnahmetasche 15 auszubilden. Vorteilhaft ist auch die Anordnung und Ausbildung mehrerer Aufnahmetaschen 15, 15' an der Außenwandfläche 10c des Halsbandes 10 (Fig. 1). Besteht das Aufnahmetaschenmaterial aus einer wasserdampfdurchlässigen Kunststoffolie 17, dann ist die Möglichkeit gegeben, daß die Duft- und Riechstoffe durch das Kunststoffolienmaterial hindurch nach außen diffundieren. Neben pflanzlichen Duftstoffen können auch synthetische Duftstoffe verwendet werden. Diese pflanzlichen Duftstoffe liegen in Form von ätherischen Ölen vor, die nach an sich bekannten Verfahren aus Pflanzen, Blüten, Blättern, Früchten, Stielen u. dgl. gewonnen werden. Auch Öle der Zitrone, Orange und Bergamotte können als Duftstoffe eingesetzt werden. Die Duftstoffe können auch in Form von Fetten vorliegen, zumal es bekannt ist, besonders empfindliche Blütenduftstoffe durch Extraktion mit Fetten zu erhalten. Auch Duftstoff-Fett- oder -Wachs-Gemische können als Grundmasse eingesetzt werden. Auch Resinoide, das sind Extrakte aus Balsamen und tropischen Harzen, können als duftstoffproduzierendes Produkt verwendet werden. Neben anderen Riechstoffen können auch Extrakte in Form von Fixateuren eingesetzt werden, die den Geruch festhaltende Stoffe bilden. Insbesondere für einen lang anhaltenden Duft sind derartige Fixateure geeignet.

Auch der Einsatz von synthetischen Duftstoffen ist möglich. Neben halbsynthetischen Riechstoffen sind auch vollsynthetische Riechstoffe verwendbar, wobei sich die Duftnote jeweils nach dem Ausgangsmaterial richtet. Die Wahl der eingesetzten Duft- und Riechstoffe ist nicht begrenzt; die jeweils eingesetzten Duft- und Riechstoffe werden sich jeweils nach dem ausströmenden Geruch des eingesetzten Insektizids richten, denn es soll ja eine Maskierung bzw. Überlagerung des vom Insektizid ausgehenden Geruches erreicht werden. Für den Einsatz bei Hunden weist das Halsband folgende Zusammensetzung wirksamer Bestandteile auf:
Das Halsband zu 24g enthält 3,6g Dimpylat als Wirkstoff gegen Ungeziefer. Weitere Bestandteile sind: Polyvinylchlorid, Dioctylphthalat, Di-isobutylphthalat, epoxidiertes Sojabohnenöl, Calciumstearat, Zinkstearat, Stearinsäure, Calciumcarbonat, ätherische Öle und Farbstoffe, wobei die Gewichtsverhältnisse dieser Bestandteile durchaus wählbar sind.

Die Gewichtsteile der einzelnen Komponenten können variiert werden. Die Mengen werden dem Einsatzgebiet angepaßt und darauf abgestimmt, ob das Halsband für einen Hund, eine Katze oder ein anderes, in Wohnungen gehaltenes Tier bestimmt ist.

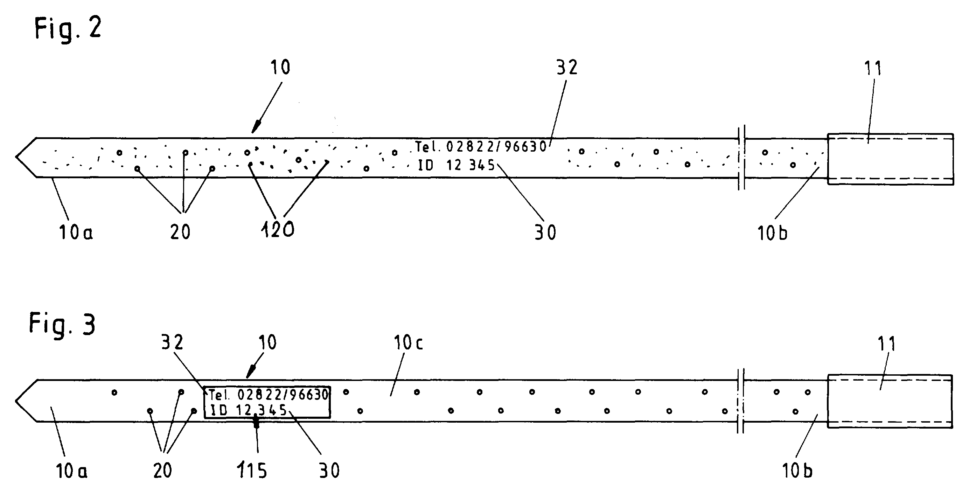

Das in Fig. 2 und 3 dargestellte Halsband 10 besteht ebenfalls aus einem bandförmigen Zuschnitt mit den Enden 10a, 10b aus einem Kunststoff, insbesondere einem plastischen Kunststoff, in den ein Insektizid eingearbeitet ist. Auch hier ist vorteilhaft die Verwendung von Dimpylat als Wirkstoff gegen Ungeziefer, mit dem Hunde befallen sind. An den Enden ist das Halsband 10 mit geeigneten Verschlußmitteln versehen. Diese Verschlußmittel, die in Fig. 1 mit dem Bezugszeichen 11 gekennzeichnet sind, können als Klemmverschlüsse, als Rastverschlüsse oder als Klettverschlüsse ausgebildet sein, wobei auch andersartig ausgebildete Verschlußmittel eingesetzt werden können.

Das in das Kunststoffmaterial des Halsbandes 10 eingearbeitete Insektizid ist in Form kleiner Partikelchen 20 angedeutet, um darzustellen, daß in das Kunststoffmaterial des Halsbandes 10 Insektizide eingearbeitet sind.

In Fig. 2 ist eine erste Ausführungsform der Erfindung dargestellt, bei der die Telefon- 32 und Identifikationsnummer 30 direkt in das Halsband 10 eingestanzt ist. Die Nummern können sowohl übereinander als auch nebeneinander angeordnet sein.

In einer in Fig. 3 dargestellten zweiten Ausführungsform sind die Identifikations- 30 und die Telefonnummer 32 auf einen Träger 115 aufgebracht und auf der Außenfläche 10c des Halsbandes 10 befestigt. Der Träger 115 kann eine Kunststoffolie sein, auf dem die Nummern ausgedruckt sind und der mit dem Halsband 10 verschweißt ist. Ebenso ist auch ein Aufnieten oder Kleben möglich.

Der Träger kann ebenso eine Metallfolie, -platte oder -scheibe sein, auf die die Nummern aufgestanzt sind. Diese Art von Träger kann beispielsweise aufgenietet, angeklebt oder durch Biegen im das Halsband an diesem befestigt sein.

Der Träger 115 kann auch in aufgenähten oder aufgeschweißten Taschen und/oder Hüllen (nicht dargestellt) angeordnet werden. Wichtig ist jedoch, daß die Telefon- 32 und die Identifikationsnummer 30 leicht zu finden und abzulesen sind. Beispielsweise kann mach durch entsprechende Leuchtmarkierungen am Träger 115 oder des Aufdrucks der Nummern selbst auf diese Information aufmerksam machen.

Selbstverständlich müssen Telefonnummern 32 und Identifikationsnummern 30 nicht in derselben Weise auf dem Halsband 10 aufgebracht sein. Es ist beispielsweise auch möglich, von vornherein die Telefonnummer 32 einzuprägen, während man die kundenindividuelle Identifikationsnummer 30 erst später anbringt, z.B. auf einen Träger, der in einer der oben oder in den Ansprüchen beschriebenen Weise am Halsband befestigt wird. Aber auch jede beliebige Kombination der Anbringungsarten jeweils für Telefonnummer 32 und Identifikationsnummer 30 ist möglich.

Es ist ferner auch möglich, die Nummern an oder auf den Verschlußmitteln anzubringen.

Mit der am Halsband angebrachten Identifikationsnummer 30 (ID-Nr.) und Telefonnummer 32 ist es möglich, das Tier in einen sogen. S.O.S.-Suchservice zu integrieren. Durch ein fortlaufendes Nummerierungssystem trägt jedes Halsband 10 eine andere Identifikationsnummer 30.

Der Finder eines verirrten oder verlorenen Hundes oder einer verirrten oder verlorenen Katze mit einem erfindungsgemäßen Halsband 10 hat die Möglichkeit, die auf dem Halsband vermerkte Nummer anzurufen. Der S.O.S.-Suchservice erfragt die Identifikationsnummer, die ebenfalls auf dem Halsband 10 vermerkt ist und optimal zusätzlich typische Merkmale des Tieres, wie Geschlecht, Farbe und/oder Rasse trägt. Anhand dieser Informationen kann der S.O.S.-Suchservice Adresse und Telefonnummer des Eigentümers an den Finder weitergeben, so daß dieser mit dem Eigentümer in Kontakt treten kann und eine Rückführung des Tieres an den Eigentümer möglich ist.

Es ist dabei erforderlich, daß der Tiereigentümer vorher sein Tier mit der Identifikationsnummer beim S.O.S.-Suchservice registriert hat, so daß die entsprechenden Daten dort gespeichert sind.

Das Anbringen der Tieridentifikationsnummer kann in Form eines Aufdrucks, bevorzugterweise in Form eines Farbaufdrucks, erfolgen, wobei eine sich von der Farbe des Halsbandes abweichende Farbe für den Aufdruck verwendet werden sollte. Anstelle eines Aufdrucks kann die Tieridentifikationsnummer auch in Form einer Perforierung am Halsband angebracht werden.

## Patentansprüche

1. Halsband zum Befestigen am Hals eines Tieres, wie Hund, Katze, od. dgl. gegen Ungeziefer, insbesondere Flöhe, wobei in das aus einem Kunststoffmaterial bestehende Bandmaterial ein Insektizid eingearbeitet ist,
dadurch gekennzeichnet,
daß die Außenwandfläche (10c) des Halsbandes (10) mindestens eine Aufnahmetasche (15) für einen Riech- oder Duftstoff (120) aufweist.

2. Halsband nach Anspruch 1,
dadurch gekennzeichnet,
daß an der Außenwandfläche (10c) des Halsbandes (10) mehrere Aufnahmetaschen (15, 15') für einen Riech- oder Duftstoff (120) ausgebildet sind.

3. Halsband nach einem der Ansprüche 1 oder 2,
dadurch gekennzeichnet,
daß die Außenwand (16) der Aufnahmetasche (15) aus einer wasserdampfdurchlässigen Kunststoffolie (17) besteht.

4. Halsband nach einem der Ansprüche 1 bis 3,
dadurch gekennzeichnet,
daß an dem Halsband (10) zur Zurückführung eines verirrten oder verlorenen Tieres zum Eigentümer eine Identifikationsnummer (30) und eine Telefonnummer (32) angeordnet ist.

5. Halsband nach Anspruch 4,
dadurch gekennzeichnet,
daß die Telefon- (32) und/oder Identifikationsnummer (30) in das Halsband (10) eingeprägt ist.

6. Halsband nach Anspruch 4,
dadurch gekennzeichnet,
daß die Telefon- (32) und/oder Identifikationsnummer (30) auf das Halsband (10) oder auf eine Kunststoffolie (115) gedruckt ist, die mit der Außenseite (10c) des Halsbandes (10) oder mit dem Halsband (10) verschweißt ist.

7. Halsband nach einem der Ansprüche 4 bis 6,
dadurch gekennzeichnet,
daß die Telefon- (32) und/oder Identifikationsnummer (30) auf einen Träger (115) aufgebracht ist, der in einer aufgeschweißten oder aufgenähten Tasche oder Hülle angeordnet ist.

8. Halsband nach einem der Ansprüche 4 bis 6,
dadurch gekennzeichnet,
daß die Telefon- (32) und/oder Identifikationsnummer (30) auf einem Träger (115) aufgebracht ist, der auf dem Halsband (10) aufgenietet oder aufgeklebt ist.

9. Halsband nach Anspruch 8,
dadurch gekennzeichnet,
daß der Träger (115) eine Kunststoffolie ist, auf der die Telefon- (32) und/oder Identifikationsnummer (30) aufgedruckt ist.

10. Halsband nach Anspruch 8,
dadurch gekennzeichnet,
daß der Träger (115) eine Metallfolie ist, auf dem die Telefon- (32) und/oder Identifikationsnummer (30) eingestanzt ist.

11. Halsband nach Anspruch 8,
dadurch gekennzeichnet,
daß der Träger (115) eine Metallfolie oder Metallscheibe oder Metallplatte ist, auf dem die Telefon- (32) und/oder Identifikationsnummer (30) eingestanzt ist, wobei dieser Träger durch Biegen um das Halsband (10) an diesem befestigt ist.

12. Halsband nach einem der Ansprüche 1 bis 11,
dadurch gekennzeichnet,
daß das in das Material des Halsbandes (10) eingearbeitete Insektizid ein Dimpylat ist.

13. Halsband nach einem der Ansprüche 1 bis 11,
dadurch gekennzeichnet,
daß das Halsband (10) zu 24g als Insektizid (20), 3,6g Dimpylat und folgende Bestandteile enthält:
Polyvinylchlorid,
Dioctylphthalat,
Di-isobutylphthalat,
epoxidiertes Sojabohnenöl,
Calciumstearat,
Zinkstearat,
Stearinsäure,
Calciumcarbonat,
ätherische Öle,
Farbstoff.
